# DEMANDE DE BREVET EUROPEEN

(11) **EP 1 879 332 A1**
(43) Date de publication de la demande: **16.01.2008**
(21) Numéro de dépôt: 07111881.4
(22) Date de dépôt: 05.07.2007
(51) Int. Cl.: H04L 12/46, H04L 29/06

(54) **PROCEDE ET SYSTEME DE GESTION D'UNE TRANSMISSION SECURISEE**

(30) Priorité: 12.07.2006 FR 0652936
(71) Demandeur: France Télécom, 75015 Paris (FR)
(72) Inventeur: Esperet, Jean-Francois, 35410, NOUVOITOU (FR); Hingant, Pascal, 35210, MELESSE (FR)

(57) **Abrégé**

Selon l'invention, ledit système comprend au moins un gestionnaire (11) de sessions apte à la réception d'au moins une demande de connexion avec au moins un équipement distant (14) défini à partir d'au moins un terminal (10) de communication et apte à la création et à la gestion simultanée et automatique d'au moins une session sécurisée de travail vers ledit terminal (10) d'une part et ledit équipement distant (14) d'autre part, et comprend au moins un dispositif (13) de sécurité, correspondant audit équipement distant (14) défini, apte à établir simultanément et automatiquement au moins une session de communication puis ladite session sécurisée de travail avec ledit gestionnaire (11) de sessions.

Application à l'automatisation de la sécurisation de la transmission vers un équipement distant (14) sans intervention d'un utilisateur.

## Description

La présente invention concerne un procédé et un système de gestion d'au moins une transmission sécurisée vers au moins un équipement distant.

L'invention s'applique plus particulièrement à l'automatisation de la sécurisation de la transmission vers un équipement distant sans intervention d'un utilisateur.

Actuellement, un utilisateur peut effectuer la gestion à distance d'un équipement à partir d'un terminal de communication raccordé sur un réseau public de télécommunications. Pour assurer la sécurité des communications, l'accès à distance est généralement réalisé au travers d'un réseau de commutation de paquets avec un protocole X25 normalisé, de manière à protéger les transmissions entre le terminal et un équipement distant. Les communications du réseau X25 sont sécurisées par le Réseau Intelligent (ou RI). Les utilisateurs, abonnés à ce réseau, sont rassemblés en différents Groupes Fermés d'Abonnés (ou GFA). Les communications ne sont autorisées que pour les utilisateurs d'un même GFA. La sécurisation est intrinsèque au réseau X25, qui est un réseau fermé et protégé. Les GFA font partie du protocole X25 et l'appartenance à un GFA fait également partie des paramètres des abonnés au réseau X25. Un terminal, abonné au réseau X25, doit avoir le même Groupe Fermé d'Abonné (GFA) que ledit équipement distant auquel il souhaite accéder. Mais, le réseau X25 est ancien et à présent en régression. Son accès n'est pas garanti à partir de toutes les zones géographiques. De plus, lorsque le réseau X25 est en panne, aucune solution alternative de transmission n'est possible avec un réseau sécurisé.

Un accès à distance pour la gestion d'un équipement distant peut également être réalisé à partir d'un réseau téléphonique public. Dans ce cas, la sécurité ne porte que sur l'établissement de la connexion, par exemple par l'appel d'un numéro de téléphone vers un terminal local de gestion de l'équipement distant. Lors de l'établissement de la connexion, par protection, est utilisé un mécanisme de rappel automatique de l'appelant (ou "call back") après réception de la demande de connexion. Mais, une fois la connexion établie, la communication et la transmission de données n'est pas protégée sur le réseau téléphonique public.

Aussi un problème technique à résoudre par l'objet de la présente invention est de proposer un procédé et un système de gestion d'au moins une transmission sécurisée vers au moins un équipement distant, qui permettrait de remédier aux inconvénients des systèmes existants en permettant une connexion à partir d'un réseau de télécommunications non sécurisé, tout en garantissant la fiabilité et la confidentialité de la transmission avec ledit équipement distant.

La présente invention offre une solution qui ne présente pas ces inconvénients en proposant, selon un premier de ses aspects, un procédé remarquable en ce qu'il inclut au moins :
- une étape pour connecter au moins un terminal à au moins un gestionnaire de sessions pour définir au moins un équipement distant,
- une étape pour commander automatiquement, par ledit gestionnaire de sessions, une ouverture d'au moins une session de communication pour établir une connexion vers au moins un dispositif de sécurité relié audit équipement distant défini,
- une étape pour contrôler automatiquement, par ledit gestionnaire de sessions, au moins une application de sécurisation du terminal pour créer au moins un premier tunnel sécurisé de transmission,
- une étape pour créer, par ledit gestionnaire de sessions, au moins une session sécurisée de travail vers ledit dispositif de sécurité,
- une étape pour transmettre au moins une donnée entre le terminal et l'équipement distant.

Selon un autre de ses aspects, l'invention concerne un système de gestion d'au moins une transmission sécurisée vers au moins un équipement distant, lequel système comprenant : au moins un gestionnaire de sessions apte à la réception d'au moins une demande de connexion avec au moins un équipement distant défini à partir d'au moins un terminal de communication et apte à la création et à la gestion simultanée et automatique d'au moins une session sécurisée de travail vers ledit terminal d'une part et vers ledit équipement distant d'autre part, et comprend au moins un dispositif de sécurité, correspondant audit équipement distant défini, apte à établir simultanément et automatiquement au moins une session de communication puis ladite session sécurisée de travail avec ledit gestionnaire de sessions.

Selon un mode de réalisation de l'invention, ledit premier tunnel sécurisé de transmission est créé, par ledit gestionnaire de sessions, vers ledit terminal pour chaque session de communication.

Conformément à un mode de réalisation de l'invention, un deuxième tunnel sécurisé de transmission est créé, par ledit gestionnaire de sessions, vers ledit dispositif de sécurité pour chaque session de communication.

Ladite invention propose une architecture technique pour la gestion de transmissions sécurisées et un procédé simple pour ladite gestion sans intervention de l'utilisateur du fait de l'automatisation grâce à au moins un gestionnaire de sessions.

Ainsi lesdits système et procédé de gestion permettent à un terminal de communication d'établir une connexion et de transmettre des données vers un équipement distant par l'intermédiaire dudit gestionnaire de sessions. Pour chaque transmission de données souhaitée, une session de communication est alors créée et gérée par le gestionnaire de sessions vers au moins un dispositif de sécurité, correspondant audit équipement distant défini. Pour chaque session de communication, le gestionnaire de sessions créé ensuite au moins un premier tunnel sécurisé de transmission avec une application de sécurisation du terminal de communication. Ledit gestionnaire de sessions créé également au moins un deuxième tunnel de transmission vers ledit dispositif de sécurité relié audit équipement distant défini.

Conformément à un mode de réalisation, chaque session sécurisée de travail vers au moins un dispositif de sécurité est identifiée par une session de communication.

Le gestionnaire de sessions gère la séparation et l'étanchéité des différentes connexions et des transmissions établies avec un même dispositif de sécurité, ainsi que les connexions et les transmissions avec les autres dispositifs de sécurité existants.

Conformément à un mode de réalisation particulier, ledit gestionnaire de sessions créé une ou plusieurs sessions de communications vers différents dispositifs de sécurité.

De cette façon, grâce au gestionnaire de sessions, l'invention permet la gestion indépendante et simultanée des différentes sessions de communication et sessions sécurisées de travail correspondant aux différents terminaux et aux différents équipements distants, par l'intermédiaire d'un réseau de télécommunications public non sécurisé.

Selon un mode de réalisation de l'invention, une ou plusieurs sessions de communications, une ou plusieurs sessions sécurisées de travail, séparément ou en combinaison, sont créées simultanément par ledit gestionnaire de sessions vers un ou plusieurs dispositifs de sécurité.

Selon un mode particulier de réalisation, ledit gestionnaire de sessions créé une ou plusieurs sessions sécurisées de travail pour une session de communication.

Le gestionnaire de sessions et le dispositif de sécurité permettent un fonctionnement multi-sessions du système et du procédé conformes à l'invention. Plusieurs équipements distants peuvent être connectés à un même dispositif de sécurité. De même, plusieurs terminaux de communication et/ou plusieurs dispositifs de sécurité peuvent être connectés à un gestionnaire de sessions.

De plus, une fois une session de communication établie entre un gestionnaire de sessions et un dispositif de sécurité, plusieurs sessions sécurisées de travail peuvent être établie grâce à cette session de communication vers différents terminaux de communication et/ou vers différents équipements distants.

La description qui va suivre en regard du dessin annexé, donné à titre d'exemple non limitatif, fera bien comprendre en quoi consiste l'invention et comment elle peut être réalisée.

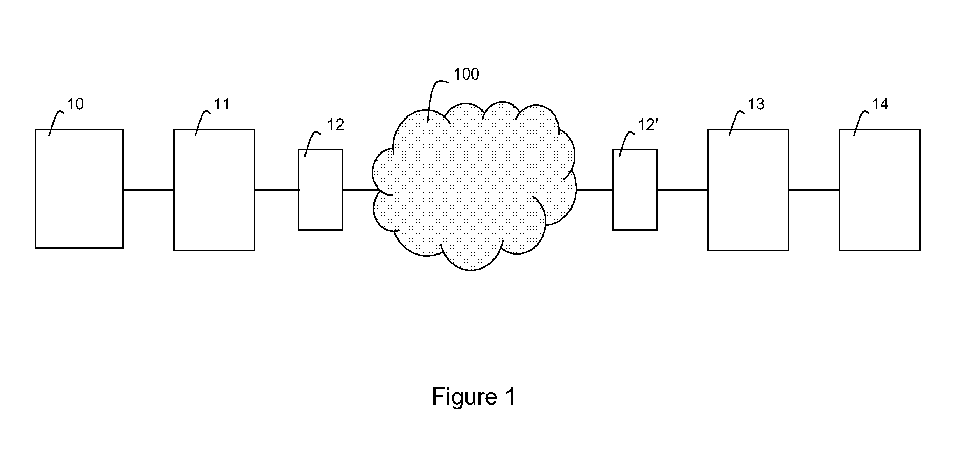

La figure 1 représente l'architecture générale d'un système de gestion d'au moins une transmission sécurisée vers au moins un équipement distant, conforme à l'invention.

Un système de gestion, conforme à l'invention, pour au moins une transmission sécurisée vers au moins un équipement distant 14 à partir d'au moins un terminal 10 de communication comprend au moins un gestionnaire 11 de sessions et au moins un dispositif 13 de sécurité, ledit système étant représenté en figure 1.

Le système de gestion comprend également au moins une base de données pour mettre en mémoire toutes les données nécessaires au fonctionnement dudit système. Ladite base de données peut être physiquement incluse ou non audit système de gestion, en particulier incluse audit gestionnaire 11 de sessions.

De plus, il comprend au moins un dispositif modem 12, 12' permettant la modulation et la démodulation des données émises lors de la transmission sécurisée et transmises par ledit système de gestion. Ledit dispositif modem 12, 12' peut être physiquement inclus ou non audit système de gestion, en particulier inclus audit gestionnaire 11 de sessions d'une part ou bien audit dispositif 13 de sécurité d'autre part.

Un ou plusieurs terminaux 10 de communication, répartis sur des sites et dans des zones géographiques différentes, peuvent être connectés vers un ou plusieurs dispositifs modem 12. De même, un ou plusieurs dispositifs 13 de sécurité, également répartis sur des sites et dans des zones géographiques différentes, peuvent être connectés vers un ou plusieurs dispositifs modem 12'.

Le terminal 10 de communication est de toute nature, tel qu'un ordinateur personnel ou PC, une console de supervision, une machine informatique, un terminal de commande, etc..., adapté à la transmission de données vers au moins un réseau 100 de télécommunications et vers un gestionnaire 11 de sessions. Ledit terminal 10 est configuré avec au moins une application logicielle de sécurisation, telle qu'une application de terminal pour le protocole SSH (ou Secure SHell), protocole permettant la création d'une session sécurisée de transmission de données. Il est configuré pour mettre en oeuvre ladite application de sécurisation pour la création d'au moins un tunnel sécurisé de transmission avec au moins un gestionnaire 11 de sessions. Ladite application de sécurisation contrôle au moins une transmission de données par une session sécurisée de travail vers au moins un dispositif 13 de sécurité relié à un ou plusieurs équipements distants 14.

De la même manière, un équipement distant 14 peut être de différentes natures, tel qu'un équipement réseau comme un routeur ou un commutateur, un équipement informatique, un équipement de commandes de relais, pour par exemple la commande d'une climatisation ou d'une chaudière ou toute commande de domotique, etc... ou tout équipement ayant une console d'exploitation locale. La gestion à distance permet, notamment, la visualisation du fonctionnement de l'équipement, la transmission d'une commande, la modification de la configuration de l'équipement, etc...

Ledit réseau 100 de télécommunications est un réseau public dont les transmissions ne sont pas sécurisées (réseau non fermé ou/et non protégé), tel qu'un réseau téléphonique ou RTC (Réseau Téléphonique Commuté), un réseau de transmission sur ADSL (Asymmetric Digital Subscriber Line), un réseau de transmission en ATM, etc...

Ledit gestionnaire 11 de sessions est apte à la réception d'au moins une demande de connexion avec au moins un équipement distant 14, défini à partir d'au moins un terminal 10 de communication. Le gestionnaire 11 de sessions est configuré pour la gestion et la mise en mémoire d'au moins une identification de ladite connexion dans au moins une base de données et pour la transmission de données vers au moins un dispositif 13 de sécurité relié à au moins un équipement distant 14. Le gestionnaire 11 de sessions peut notamment être un site web sur le réseau Internet ou bien tout autre serveur de communications auquel l'utilisateur du terminal 10 peut accéder. L'équipement du gestionnaire 11 de sessions peut être doublé par sécurité et pour garantir la continuité du service.

Le terminal 10 de communication est connecté au gestionnaire 11 de sessions pour demander une connexion vers au moins un équipement distant 14. De manière à préserver la confidentialité, le raccordement du terminal 10 vers le gestionnaire 11 de sessions est réalisé par une transmission sécurisée grâce à un protocole de transmission existant pour le chiffrement des communications, tel que le protocole sécurisé HTTPS (Hyper Text Transfert Protocol Secured) pour un serveur web ou bien grâce à un réseau local sécurisé tel qu'un LAN (Local Area Network) ou un réseau WAN (Wide Area Network) permettant l'interconnexion de plusieurs LAN ou tout réseau privé d'entreprise...

Le gestionnaire 11 de sessions est connecté à un ou plusieurs dispositifs modem 12, permettant une connexion et une transmission de données par différentes connexions simultanément. Les différentes connexions peuvent être réalisées sur les différents ports série, par exemple un port RS232. D'une part, chaque dispositif modem 12 est raccordé à au moins un gestionnaire 11 de sessions. D'autre part, il est également relié audit réseau 100 de télécommunications.

Ladite base de données contient au moins une liste des utilisateurs des terminaux 10 pouvant se connecter au gestionnaire 11 de sessions, une liste de profils pour les droits associés à ces utilisateurs, une liste des différents dispositifs 13 de sécurité et des différents équipements distants 14 pour chaque dispositif 13 de sécurité, une liste des divers moyens d'accès audits dispositifs 13 de sécurité et équipements distants 14, tels qu'un numéro de téléphone, une adresse IP (Internet Protocol), etc...

Ledit dispositif 13 de sécurité est apte à la réception, en provenance d'au moins un gestionnaire 11 de sessions, d'au moins une demande de connexion vers au moins un équipement distant 14. Il est apte à recevoir et reconnaître au moins une identification d'au moins un équipement distant 14. Il est configuré pour recevoir au moins une demande de connexion entre un ou plusieurs gestionnaires 11 de sessions et un ou plusieurs équipements distants 14. Il est également configuré pour établir au moins une connexion vers un ou plusieurs équipements distants 14, un même dispositif 13 de sécurité pouvant être connecté à un ou plusieurs équipements distants. Chaque connexion est référencée par une session sécurisée de travail identifiée, correspondant à une session de communication pour permettre une transmission sécurisée entre un terminal 10 et un équipement distant 14 défini. Donc, chaque session sécurisée de travail vers un dispositif 13 de sécurité est identifiée par une session de communication. De plus, un deuxième dispositif 13 de sécurité peut également être connecté à un port d'un premier dispositif 13 de sécurité, par exemple grâce à un port Ethernet.

Par ailleurs, un dispositif 13 de sécurité peut être connecté à un ou plusieurs dispositifs modem 12', permettant un raccordement et la transmission vers un réseau 100 de télécommunications. Les différentes connexions peuvent être réalisées sur les différents ports série, par exemple un port RS232. D'une part, chaque dispositif modem 12' est raccordé à au moins un dispositif 13 de sécurité. D'autre part, il est également relié à au moins un réseau 100 de télécommunications, tel que par exemple le réseau téléphonique dit RTC (Réseau Téléphonique Commuté) ou bien un réseau de transmission sur ADSL (Asymmetric Digital Subscriber Line), etc...

Conformément aux étapes du procédé de l'invention, un utilisateur d'un terminal 10 se connecte à un gestionnaire 11 de sessions ; il accède par exemple à un portail d'accès au service ou bien à une page d'accueil ou bien simplement directement à une liste des équipements distants 14 existants ou autorisés. Le terminal 10 reçoit en retour au moins une demande d'authentification, tel que par exemple une demande pour entrer un login et un mot de passe. Une fois l'utilisateur authentifié, il peut sélectionner un équipement distant 14 avec lequel il souhaite se connecter. Le gestionnaire 11 de sessions contrôle dans le profil de l'utilisateur son droit d'accès à un équipement distant 14 sélectionné, par exemple administrateur, arrét/marche de l'équipement, etc... ou accès limité à une partie des équipements distants 14. S'il est autorisé, l'utilisateur demande alors l'établissement d'une communication avec ledit équipement distant 14 défini.

Le procédé comprend donc une étape pour connecter le terminal 10 au gestionnaire 11 de sessions pour définir un équipement distant 14, vers lequel ledit terminal 10 va transmettre des données. Le gestionnaire 11 de sessions est configuré pour la réception d'au moins une demande de connexion avec au moins un équipement distant 14, qui est défini à partir du terminal 10 de communication.

Le gestionnaire 11 de sessions commande automatiquement une ouverture d'au moins une session de communication pour établir une connexion, via le réseau 100 de télécommunications, vers un dispositif 13 de sécurité relié à au moins ledit équipement distant 14, défini par le terminal 10. L'étape de l'ouverture d'une session de communication n'est pas obligatoire si une connexion est déjà établie entre un même gestionnaire 11 de sessions et un même dispositif 13 de sécurité. Un numéro d'identification spécifique est affecté à ladite session de communication et sauvegardé dans la base de données, permettant de différencier les différentes demandes de connexion. Le gestionnaire 11 de sessions recherche dans au moins une base de données les informations nécessaires à l'établissement de la connexion, par exemple un numéro de téléphone d'un dispositif modem 12' à appeler sur un site géographique de l'équipement distant 14, une adresse IP, un numéro de port d'entrée vers un terminal local du site raccordé au dispositif 13 de sécurité. Avec ces informations, le gestionnaire 11 établit une connexion avec un dispositif 13 de sécurité correspondant à l'équipement distant 14 défini par l'utilisateur. Par exemple, la session de communication est une connexion, établie avec un protocole point à point (PPP, soit Point to Point Protocol) normalisé permettant la transmission de données par l'intermédiaire d'un dispositif modem, par exemple grâce à un port série. Le dispositif 13 de sécurité valide la connexion après authentification du gestionnaire 11.

Le gestionnaire 11 de sessions commande automatiquement au moins une application logicielle SSH de sécurisation du terminal 10 pour une création d'au moins une première session sécurisée SSH1, par l'intermédiaire d'un tunnel sécurisé de transmission entre le gestionnaire 11 et ledit terminal 10. Le terminal 10 est configuré avec au moins une application de sécurisation pour la création dudit tunnel sécurisé de transmission avec au moins un gestionnaire 11 de sessions. Un numéro d'identification spécifique est affecté à ladite session sécurisée SSH1 et sauvegardé dans la base de données, permettant de différencier les différentes transmissions vers le gestionnaire 11 de sessions. Ladite session sécurisée SSH1 est associée à ladite session de communication, identifiée à la demande de connexion dudit terminal 10 vers ledit dispositif 13 de sécurité, relié au équipement distant 14 défini. Le gestionnaire 11 de sessions créé un premier tunnel sécurisé de transmission vers un terminal 10 pour chaque session de communication. Par conséquent, à partir d'un même terminal 10 de communication, plusieurs tunnels sécurisés de transmission peuvent être créés vers un ou plusieurs gestionnaires 11 de sessions.

L'ouverture de la session sécurisée SSH1 avec l'application de sécurisation du terminal 10 est automatisée et ne demande aucune intervention de l'utilisateur. Le gestionnaire 11 de sessions contrôle automatiquement lesdites applications de sécurisation des terminaux 10 de communication pour créer ledit premier tunnel sécurisé de transmission. De ce fait, l'utilisateur ne connaît et n'a accès à aucune information permettant l'établissement et la sécurisation de la connexion et de la transmission avec ledit équipement distant 14, telle qu'un numéro de téléphone, une adresse IP d'un dispositif de sécurité, etc...

De plus, ladite première session sécurisée SSH1 est indépendante de la connexion initiale permettant à l'utilisateur du terminal 10 de définir un équipement distant 14 auquel il souhaite se connecter.

Le gestionnaire 11 de sessions commande également une création d'au moins une deuxième session sécurisée SSH2 vers ledit dispositif 13 de sécurité, relié à au moins ledit équipement distant 14 défini, par l'intermédiaire d'un deuxième tunnel sécurisé de transmission entre le gestionnaire 11 de sessions et ledit dispositif 13 de sécurité. Ledit deuxième tunnel sécurisé de transmission est créé entre le gestionnaire 11 de sessions et le dispositif 13 de sécurité pour ladite session de communication identifiée. A nouveau, un numéro d'identification spécifique est affecté à ladite session sécurisée SSH2 et sauvegardé dans la base de données, permettant de différencier les différentes transmissions vers le gestionnaire 11 de sessions. La session est sécurisée avec une authentification par une méthode existante, par exemple grâce à un algorithme de chiffrement à clé asymétrique. Dans ce cas, seul le gestionnaire 11 détient une clé privée pour assurer la sécurité de la transmission vers le dispositif 13 de sécurité. La clé publique du dispositif 13 de sécurité permet la validation par authentification de la communication entre le gestionnaire 11 et ledit dispositif 13 de sécurité. Le gestionnaire 11 de sessions commande la connexion vers un équipement distant 14 par l'intermédiaire dudit dispositif 13 de sécurité.

Le procédé de l'invention comprend alors une étape pour transmettre au moins une donnée entre un terminal 10 et un équipement distant 14. Le gestionnaire 11 de sessions est apte à la création et à la gestion simultanée et automatique d'au moins une session sécurisée de travail vers un terminal 10 d'une part et vers un équipement distant 14 d'autre part. Le dispositif 13 de sécurité est apte à établir simultanément et automatiquement au moins une session de communication avec ledit gestionnaire 11 de sessions. Une fois une session de communication établie, ledit dispositif 13 de sécurité est configuré pour établir au moins une session sécurisée de travail vers ledit gestionnaire 11 de sessions.

L'ouverture de la session sécurisée SSH2 est également automatique et sans intervention de l'utilisateur. De ce fait, l'utilisateur ne connaît et n'a accès à aucune information permettant l'établissement et la sécurisation de la connexion et de la transmission vers le dispositif 13 de sécurité, telle qu'une clé publique de chiffrement permettant les échanges sécurisés entre un gestionnaire 11 de sessions et un dispositif 13 de sécurité, ou une clé privée connue uniquement par ledit gestionnaire 11 de sessions.

Le gestionnaire 11 contrôle une session sécurisée de travail SSH correspondant aux deux tunnels sécurisés de transmission, soit un tunnel SSH1 vers un terminal 10 et un tunnel SSH2 vers un dispositif 13 de sécurité, par l'intermédiaire des dispositifs modem 12 et 12'. Le couple SSH1 et SSH2 est fortement identifié pour une même session sécurisée de travail, de manière à permettre une transmission fiable et sécurisée entre le terminal 10 et un dispositif 13 de sécurité, vers un équipement distant 14. Un premier tunnel sécurisé de transmission est créé par le gestionnaire 11 de sessions vers le terminal 10 pour chaque session de communication. De même, un deuxième tunnel sécurisé de transmission est créé vers au moins un dispositif 13 de sécurité pour chaque session de communication. Ladite application de sécurisation du terminal 10 contrôle la transmission de données par une session sécurisée de travail, grâce aux tunnels de transmission, vers au moins un équipement distant 14, par l'intermédiaire du réseau 100 de télécommunications public non sécurisé.

Comme mentionné précédemment, le protocole de connexion est sécurisé, avec une authentification de l'utilisateur, ainsi que des terminaux et équipements connectés. Les algorithmes utilisés garantissent la confidentialité de la transmission de données. Aucun mot de passe n'est transmis en clair lors des sessions et les sessions sont elles-mêmes chiffrées.

Un programme d'ordinateur du gestionnaire 11 de sessions permet la gestion simultanée des deux sessions sécurisée SSH1 et SSH2 pour une session de communication. Ledit programme d'ordinateur comprend des portions de code pour l'exécution des différentes étapes fonctionnelles contrôlées par le gestionnaire 11 de sessions. Notamment, il permet la réception d'au moins une demande de connexion, la création et la gestion d'au moins une session sécurisée de travail.

Pour des raisons de sécurité, notamment si le terminal 10 n'est pas connecté par un réseau protégé au gestionnaire 11 de sessions, la session sécurisée SSH1 peut être de même nature que la session sécurisée SSH2, avec un échange de données chiffrées grâce à une clé publique connue du terminal 10. De même, la session sécurisée de travail peut être établie jusqu'à un équipement distant 14, si celui-ci n'est pas connecté localement à un dispositif 13 de sécurité.

Une ou plusieurs sessions de communication et/ou une ou plusieurs sessions sécurisées de travail sont créées vers un ou plusieurs dispositifs 13 de sécurité, puis contrôlées par au moins un gestionnaire 11 de sessions. Un gestionnaire 11 de sessions peut créer plusieurs sessions de communications vers différents dispositifs 13 de sécurité. De plus, entre un gestionnaire 11 de sessions et un dispositif 13 de sécurité, une unique session de communication peut permettre d'établir plusieurs sessions sécurisées de travail vers différents terminaux 10 de communication ou bien vers différents équipements distants 14, grâce à une forte identification des sessions sécurisées. Ledit gestionnaire 11 de sessions peut créer une ou plusieurs sessions sécurisées de travail pour une même session de communication.

De plus, plusieurs terminaux 10 peuvent se connecter à un même équipement distant 14, par exemple pour permettre une maintenance à distance avec différents experts techniques. Une fois la session de communication établie, plusieurs sessions sécurisées de travail peuvent être établie vers un dispositif 13 de sécurité et vers un même équipement distant 14, tout en garantissant la séparation des différentes transmissions de données identifiées.

Les deux sessions sécurisées étant actives, une session sécurisée de travail est donc créée entre un terminal 10 et un équipement distant 14 par l'intermédiaire des dispositifs modem 12 et 12', d'un gestionnaire 11 de sessions et d'un dispositif 13 de sécurité. Ainsi, avec les mêmes fonctions qu'un terminal local situé sur le site géographique de l'équipement distant 14, le terminal 10 peut alors effectuer une transmission de données, telles qu'une commande à exécuter, modifier ou superviser un programme, visualiser un fonctionnement, etc..., vers l'équipement distant 14, de la même manière que s'il était situé localement auprès dudit équipement, en garantissant la sécurité de la transmission.

Une unique session de communication permet l'établissement de plusieurs transmissions simultanées vers un même dispositif 13 de sécurité. Par conséquent, lorsqu'un utilisateur d'un terminal 10 souhaite établir une communication avec un autre équipement distant, dont le dispositif 13 de sécurité est déjà connecté avec le gestionnaire 11 de sessions correspondant, seule une nouvelle session sécurisée de travail SSH, composée des deux tunnels de transmission SSH1 et SSH2, est commandée par le gestionnaire 11 de sessions vers le dispositif 13 de sécurité correspond. De plus, plusieurs dispositifs 13 de sécurité peuvent être connectés en série, de manière à permettre l'accès à un nombre plus important d'équipements distants 14, avec une même session de communication.

Chacune des différentes connexions entre un gestionnaire 11 de sessions et un dispositif 13 de sécurité est identifiée par une session sécurisée différente, correspondant à différents terminaux 10 chacun en communication avec un équipement distant 14. Ledit système de gestion d'une transmission sécurisée est donc mufti-sessions SSH, grâce à une forte et fiable identification du couple SSH1 et SSH2. Une unique session de communication entre un gestionnaire 11 de sessions et un dispositif 13 de sécurité permet plusieurs transmissions simultanées avec différents équipements distants 14, rattachés au même dispositif 13 de sécurité, pour différents terminaux 10, tout en garantissant la fiabilité et l'étanchéité des différentes transmissions. Ledit gestionnaire 11 de sessions créé une ou plusieurs sessions sécurisées de travail pour une session de communication.

Le système et le procédé de l'invention permettent donc une gestion multi-sessions de communication. Le gestionnaire 11 de sessions peut créer plusieurs sessions de communications vers différents dispositifs 13 de sécurité. Le gestionnaire 11 de sessions gère le routage vers les différentes connexions, par exemple grâce à un routage IP. Après l'établissement d'une session de communication, une session sécurisée SSH est routée dynamiquement vers la bonne session de communication. De plus, plusieurs dispositifs 13 de sécurité peuvent être connectés en série, de manière à augmenter le nombre d'équipements distants 14 accessibles grâce à une même session de communication, pour diminuer l'occupation du réseau 100 de télécommunications.

Pour la déconnexion du terminal 10 de communication, l'utilisateur active une commande pour une fin de communication avec un équipement distant 14. L'application logicielle SSH de sécurisation est alors fermée sur le terminal 10. A la fermeture de cette application SSH du terminal 10, le gestionnaire 11 de sessions commande la fermeture de la première session sécurisée SSH1 avec ledit terminal 10. Le gestionnaire 11 de sessions commande également la fermeture de la deuxième session sécurisée SSH2 vers le dispositif 13 de sécurité correspondant à l'équipement distant 14. La session de travail SSH, correspondant aux deux sessions SSH1 et SSH2 est ensuite fermée dans le gestionnaire 11 de sessions.

La fermeture d'une session de travail peut également être commandée par l'inactivité de l'utilisateur du terminal 10 (temporisation). Le dispositif 13 de sécurité ou/et l'équipement distant 14, selon le type d'équipement, peuvent également gérer eux-mêmes un délai pour une temporisation. Dans ce cas, la session sécurisée SSH2 est fermée et le gestionnaire 11 de sessions commande la fermeture de la session sécurisée SSH1.

Au moment de la fermeture, le gestionnaire 11 de sessions contrôle si aucune autre session sécurisée SSH n'est établie vers un même dispositif 13 de sécurité. S'il n'y a pas d'autres sessions sécurisée SSH en cours, ledit gestionnaire 11 coupe la connexion et la session de communication vers ledit dispositif 13 de sécurité.

Toutes les données se rapportant à une session de communication et/ou une session sécurisée de travail sont sauvegardée dans ladite base de données, à des fins de statistiques ou de vérifications en cas d'erreur ou de panne, en particulier grâce aux différents numéros d'identification.

Lesdits système et procédé, conformes à l'invention, permettent donc la mise en place d'une chaine de sécurisation par l'intermédiaire du gestionnaire 11 de sessions sans accès aux fonctions de sécurisation par l'utilisateur du terminal 10. Par exemple, le gestionnaire 11 de sessions est le seul à posséder une clé privée utilisée pour la sécurisation, clé privée qui n'est jamais communiquée.

Un programme d'ordinateur, comprenant des portions de code, est également prévu pour l'exécution des différentes étapes du procédé tel que défini précédemment, ainsi qu'un support d'enregistrement lisible par un ordinateur sur lequel est enregistré ledit programme d'ordinateur.

## Revendications

1. Procédé de gestion d'au moins une transmission sécurisée vers au moins un équipement distant (14), procédé **caractérisé en ce qu'**il inclut au moins :
- une étape pour connecter au moins un terminal (10) à au moins un gestionnaire (11) de sessions pour définir au moins un équipement distant (14),
- une étape pour commander automatiquement, par ledit gestionnaire (11) de sessions, une ouverture d'au moins une session de communication pour établir une connexion vers au moins un dispositif (13) de sécurité relié audit équipement distant (14) défini,
- une étape pour contrôler automatiquement, par ledit gestionnaire (11) de sessions, au moins une application de sécurisation du terminal (10) pour créer au moins un premier tunnel sécurisé de transmission, associé à ladite session de communication,
- une étape pour créer, par ledit gestionnaire (11) de sessions, au moins une session sécurisée de travail vers ledit dispositif (13) de sécurité pour ladite session de communication établie,
- une étape pour transmettre au moins une donnée entre le terminal (10) et l'équipement distant (14).

2. Procédé de gestion selon la revendication 1, **caractérisé en ce que** ledit premier tunnel sécurisé de transmission est crée, par ledit gestionnaire (11) de sessions, vers ledit terminal (10) pour chaque session de communication.

3. Procédé de gestion selon l'une des revendications 1 ou 2, **caractérisé en ce qu'**un deuxième tunnel sécurisé de transmission est créé, par ledit gestionnaire (11) de sessions, vers ledit dispositif (13) de sécurité pour chaque session de communication.

4. Procédé de gestion selon l'une quelconque des revendications 1 à 3, **caractérisé en ce que** chaque session sécurisée de travail vers ledit dispositif (13) de sécurité est identifiée par une session de communication.

5. Procédé de gestion selon l'une quelconque des revendications 1 à 4, **caractérisé en ce qu'**une ou plusieurs sessions de communication, une ou plusieurs sessions sécurisées de travail, séparément ou en combinaison, sont créées simultanément par ledit gestionnaire (11) de sessions vers un ou plusieurs dispositifs (13) de sécurité.

6. Procédé de gestion selon l'une quelconque des revendications 1 à 5, **caractérisé en ce que** ledit gestionnaire (11) de sessions créé une ou plusieurs sessions de communications vers différents dispositifs (13) de sécurité.

7. Procédé de gestion selon l'une quelconque des revendications 1 à 6, **caractérisé en ce que** ledit gestionnaire (11) de sessions créé une ou plusieurs sessions sécurisées de travail pour une session de communication.

8. Programme d'ordinateur **caractérisé en ce qu'**il comprend des portions de code pour l'exécution des étapes du procédé selon les revendications 1 à 7.

9. Support d'enregistrement lisible par un ordinateur sur lequel est enregistré ledit programme d'ordinateur selon la revendication 8.

10. Système de gestion d'au moins une transmission sécurisée vers au moins un équipement distant (14), **caractérisé en ce qu'**il comprend au moins un gestionnaire (11) de sessions apte à la réception d'au moins une demande de connexion avec au moins un équipement distant (14) défini à partir d'au moins un terminal (10) de communication et apte à la création et à la gestion simultanée et automatique d'au moins une session sécurisée de travail vers ledit terminal (10) d'une part et ledit équipement distant (14) d'autre part, et comprend au moins un dispositif (13) de sécurité, correspondant audit équipement distant (14) défini, apte à établir simultanément et automatiquement au moins une session de communication puis ladite session sécurisée de travail avec ledit gestionnaire (11) de sessions.

11. Gestionnaire (11) de sessions apte à être mis en oeuvre dans un système conforme à la revendication 10, **caractérisé en ce qu'**il est configuré pour la réception d'au moins une demande de connexion d'au moins un terminal (10) de communication avec au moins un équipement distant (14), pour la gestion et la mise en mémoire d'au moins une identification de ladite connexion dans au moins une base de données, pour la transmission de données vers au moins un dispositif (13) de sécurité relié audit équipement distant (14).

12. Programme d'ordinateur **caractérisé en ce qu'**il comprend des portions de code pour l'exécution des étapes fonctionnelles contrôlées par le gestionnaire (11) de sessions, selon la revendication 11.

13. Dispositif (13) de sécurité apte à être mis en oeuvre dans un système conforme à la revendication 10, **caractérisé en ce qu'**il est configuré pour la réception d'au moins une demande de connexion entre au moins un gestionnaire (11) de sessions et au moins un équipement distant (14).

14. Terminal (10) de communication apte à être mis en oeuvre dans un système conforme à la revendication 10, **caractérisé en ce qu'**il est configuré avec au moins une application de sécurisation pour la création d'au moins un tunnel sécurisé de transmission avec au moins un gestionnaire (11) de sessions.

15. Terminal (10) de communication selon la revendication 14, **caractérisé en ce que** ladite application de sécurisation contrôle au moins une transmission de données par ledit tunnel sécurisé de transmission vers au moins un équipement distant (14).
